(19) Europäisches Patentamt
European Patent Office
Office européen des brevets

(11) EP 2 375 099 A2

(12) EUROPÄISCHE PATENTANMELDUNG

(43) Veröffentlichungstag:
12.10.2011 Patentblatt 2011/41

(51) Int Cl.:
F16F 9/32 (2006.01)

(21) Anmeldenummer: 11156899.4

(22) Anmeldetag: 04.03.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 08.04.2010 DE 102010016361

(71) Anmelder: ContiTech Luftfedersysteme GmbH
30165 Hannover (DE)

(72) Erfinder:
• Reck, Siegfried
  31582, Nienburg (DE)
• Lieske, Susann
  31275, Lehrte (DE)

(74) Vertreter: Finger, Karsten
Continental Aktiengesellschaft
Patente und Lizenzen
Postfach 169
30001 Hannover (DE)

(54) **Elastomerprodukt, insbesondere Luftfeder, mit einem Sensor**

(57) Elastomerprodukt (2) mit einem Elastomerbauteil (4) , insbesondere Luftfeder (2) mit einem Balg (4), wobei in das Elastomerbauteil (4) mindestens ein Sensor eingebettet ist, mit dessen Hilfe die Dielektrizitätskonstante des Elastomers messbar ist, das den Sensor (4) umgibt.

**Fig. 1a**

**Beschreibung**

Die Erfindung betrifft ein Elastomerprodukt mit einem Elastomerbauteil, insbesondere eine Luftfeder mit einem Balg.

Luftfedern mit einem Balg sind aus dem Stand der Technik seit langem bekannt und werden beispielsweise dazu genutzt, um den Fahrzeugaufbau eines Kraftfahrzeuges gegenüber den Achsen des Kraftfahrzeuges federnd zu lagern. Es ist wichtig, den Alterungszustand des Balges der Luftfeder zu kennen, um die Luftfeder oder den Balg der Luftfeder austauschen zu können, bevor die Luftfeder ausfällt. Der Alterungsprozess des Balges der Luftfeder ist abhängig von den Umgebungseinflüssen, z. B. der Umgebungstemperatur, denen die Luftfeder ausgesetzt ist. Zusätzlich ist der Alterungsprozess des Balges der Luftfeder abhängig von der dynamischen Belastung des Balges. So ist beispielsweise die Rollfalte des Balges stärkeren dynamischen Belastungen ausgesetzt als die übrige Seitenwand des Balges, so dass der Balg im Bereich der Rollfalte schneller altert. Der Alterungsprozess des Balges der Luftfeder wurde bisher anhand von separaten Probekörpern bestimmt, die aus dem gleichen Elastomer sind, wie der Balg der Luftfeder. Die Messverfahren, mit denen der Alterungsprozess eines Probekörpers analysiert wird, können zuverlässig durchgeführt werden. Es ist jedoch festzustellen, dass der Probekörper einem künstlicheren Alterungsprozess unterzogen werden muss, um den Alterungsprozess in dem Balg der Luftfeder nachzustellen. Darüber hinaus ist festzustellen, dass mit einem Probekörper die dynamische Belastung des Balges nicht wirklichkeitsgetreu nachgestellt werden kann und Messungen an einem Probekörper keine Auskunft darüber geben, wie stark der Balg einer Luftfeder im Einsatz tatsächlich belastet wurde.

Der Erfindung liegt die Aufgabe zugrunde, ein Elastomerprodukt mit einem Elastomerbauteil, insbesondere eine Luftfeder mit einem Balg, zu schaffen, bei dem es möglich ist, den Alterungsprozess und Alterungszustand des Elastomerproduktes in dessen Einsatz kontinuierlich zu bestimmen.

Die Aufgabe wird gemäß den kennzeichnenden Merkmalen des Anspruchs 1 dadurch gelöst, dass in das Elastomerbauteil mindestens ein Sensor eingebettet ist, mit dessen Hilfe die Dielektrizitätskonstante des Elastomers messbar ist, das den Sensor umgibt.

Zwischen dem Alterungsprozess des Elastomers, das den Sensor umgibt, und der Dielektrizitätskonstanten des Elastomers besteht ein eindeutiger Zusammenhang, so dass aus der Bestimmung der Dielektrizitätskonstanten mit Hilfe des Sensors auf den Alterungsprozess und den Alterungszustand des Elastomers geschlossen werden kann.

Der mit der Erfindung erzielte Vorteil ist darin zu sehen, dass der Alterungszustand des Elastomerbauteils im Einsatz des Elastomerproduktes kontinuierlich wirklichkeitsgetreu bestimmt werden kann. Insbesondere wird bei der Bestimmung des Alterungszustandes des Elastomerbauteils die dynamische Belastung des Elastomerbauteils berücksichtigt. Ein weiterer Vorteil der Erfindung ist darin zu sehen, dass die Bestimmung des Alterungszustandes des Elastomerbauteils mit Hilfe eines Probekörpers entfallen kann.

Mit Hilfe des Sensors kann der Betrag der Dielektrizitätskonstanten bestimmt werden, aus dem bereits gut auf den Alterungszustand des Elastomerbauteils geschlossen werden kann. Gemäß einer Weiterbildung der Erfindung nach Anspruch 2 wird mit Hilfe des Sensors jedoch die komplexe Dielektrizitätskonstante bestimmt. Der Vorteil dieser Weiterbildung ist darin zu sehen, dass die Messung der komplexen Dielektrizitätskonstante (also die Bestimmung des Realteils und Imaginärteils der Dielektrizitätskonstanten) genauere Rückschlüsse auf den Alterungszustand des Elastomerbauteils zulässt als die Bestimmung des Betrages der Dielektrizitätskonstanten.

Gemäß einer Weiterbildung der Erfindung nach Anspruch 3 ist der Sensor als LC-Schwingkreis aufgebaut. Der Vorteil dieser Weiterbildung ist darin zu sehen, dass es sich bei einem LC-Schwingkreis um ein einfach aufgebautes elektrisches bzw. elektronisches Standardbauteil handelt, das preiswert herzustellen ist. Ein weiterer Vorteil der Weiterbildung ist darin zu sehen, dass mit Hilfe eines LC-Schwingkreises die Dielektrizitätskonstante des Elastomers, das den Sensor umgibt, einfach verstimmt werden kann.

Gemäß einer Weiterbildung der Erfindung nach Anspruch 4 besteht der Sensor aus zwei spiralförmigen elektrischen Leiterbahnen, die ineinander gewunden und kreuzweise miteinander elektrisch verbunden sind. Der Vorteil dieser Weiterbildung ist darin zu sehen, dass der LC-Schwingkreis ausschließlich aus zwei elektrischen Leiterbahnen aufgebaut. Ein separater Kondensator zur Ausbildung des LC-Schwingkreises ist nicht erforderlich.

Gemäß einer Weiterbildung der Erfindung nach Anspruch 5 ist der Sensor derart ausgebildet, dass mit ihm zusätzlich die Dehnung des Elastomers messbar ist, das den Sensor umgibt. Der Vorteil dieser Weiterbildung ist darin zu sehen, dass mit der Bestimmung der Dehnung eine zusätzliche Größe bestimmt wird, die auf die Haltbarkeit des Elastomerbauteils des Elastomerproduktes Einfluss hat. Ein weiterer Vorteil dieser Weiterbildung ist darin zu sehen, dass eine mit Hilfe des Sensors bestimmte Dielektrizitätskonstante um Einflüsse korrigiert werden kann, die auf eine Dehnung des Elastomerbauteils zurückzuführen sind. Somit ist auch bei einem gedehnten Elastomerbauteil eine genaue Bestimmung der Dielektrizitätskonstanten und des Alterungszustandes des Elastomerbauteils möglich.

Gemäß einer Weiterbildung der Erfindung nach Anspruch 6 weist der Sensor einen ersten LC-Schwingkreis mit einer ersten Spule auf, die in einer ersten Richtung hochohmige Spulenabschnitte aufweist, und einen zweiten LC-Schwingkreis mit einer zweiten Spule auf, die in einer zweiten Richtung hochohmige Spulenabschnitte aufweist, wobei die beiden Richtungen linear unabhängig voneinander sind. Vorzugsweise stehen die hochohmigen Spulenabschnitte der beiden Spulen rechtwinklig aufeinander. Der Vorteil dieser Weiterbildung ist darin zu sehen, dass der Sensor einen einfachen Aufbau aufweist und mit ihm die Dehnung des Elastomers einfach messbar ist. Vorzugsweise wird jeder LC-Schwingkreis des Sensors so aufgebaut, wie es im Zusammenhang mit dem Anspruch 4 erläutert worden ist.

Gemäß einer Weiterbildung der Erfindung nach Anspruch 7 ist der Sensor in ein Elastomer eingebettet, das ähnliche mechanische Eigenschaften wie das Elastomer des Elastomerproduktes aufweist und sich in seinen elektrischen Eigenschaften von dem Elastomer des Elastomerbauteils unterscheidet. Vorzugsweise wird der Sensor in das gleiche Elastomer eingebettet, aus dem das Elastomerbauteil besteht. Das Elastomer wird im Bereich des Sensors jedoch mit Zusätzen versehen, die die dielektrischen Eigenschaften des Elastomers so verändern, dass die Dielektrizitätskonstante mit Hilfe des Sensors genauer bestimmt werden kann. Dies ist beispielsweise dadurch möglich, dass das Elastomer im Bereich des Sensors mit Rußpartikeln versehen wird und somit eine höhere elektrische Leitfähigkeit erhält. Der Vorteil der Weiterbildung ist darin zu sehen, dass die Bestimmung der Dielektrizitätskonstanten des Elastomers im Bereich des Sensors sehr genau möglich ist. Somit kann sehr gut auf den Alterungszustand des Elastomers des gesamten Elastomerbauteils rückgeschlossen werden, da das Elastomer im Bereich des Sensors die gleichen mechanischen Eigenschaften aufweist, wie das Elastomer des Elastomerbauteils.

Gemäß einer Weiterbildung der Erfindung nach Anspruch 8 sind in dem Elastomerbauteil mehrere Sensoren eingebettet, die in unterschiedlichen Belastungszonen des Elastomerbauteils angeordnet sind. Der Vorteil dieser Weiterbildung ist darin zu sehen, dass mit Hilfe der Sensoren bestimmt werden kann, wie schnell das Elastomerbauteil in den unterschiedlichen Belastungszonen altert. Ein weiterer Vorteil dieser Weiterbildung ist darin zu sehen, dass mit Hilfe von mehreren Sensoren nicht nur die Anzahl der Lastwechsel, die in das Elastomerprodukt eingeleitet wurden, sondern auch die Amplitude dieser bestimmt werden kann.

Gemäß einer Weiterbildung der Erfindung nach Anspruch 9 befindet sich der Sensor auf einem Trägermaterial, wobei das Trägermaterial stoffschlüssig mit dem umgebenden Elastomermaterial des Elastomerbauteils verbunden ist. Der Vorteil dieser Weiterbildung ist darin zu sehen, dass das Trägermaterial während der Herstellung des Elastomerbauteils zur einfachen Handhabung des Sensors genutzt werden kann. Ein weiterer Vorteil der Weiterbildung ist darin zu sehen, dass der Sensor aufgrund der stoffschlüssigen Verbindung zwischen dem Trägermaterial und dem umgebenden Elastomer sicher in das Elastomer eingebettet und in seiner Position fixiert ist.

Gemäß einer Weiterbildung der Erfindung nach Anspruch 10 sind die elektrischen Leiterbahnen des Elastomers elastisch dehnbar ausgebildet. Der Vorteil dieser Weiterbildung ist darin zu sehen, dass der Sensor bei einer elastischen Dehnung des Elastomers, in das er eingebettet ist, nicht zerstört wird, da die elektrischen Leiterbahnen die Dehnung des Elastomers mitmachen. Derartige Leiterbahnen sind beispielsweise aus der DE 102 42 785 A1 bekannt.

Ein Ausführungsbeispiel und weitere Vorteile der Erfindung werden im Zusammenhang mit den nachstehenden Figuren erläutert, darin zeigt:

Fig. 1    ein Elastomerprodukt in Form einer Luftfeder,
Fig. 2    ein Diagramm,
Fig. 3    einen Sensor mit einem LC-Schwingkreis,
Fig. 4    ein Ersatzschaltbild,
Fig. 5    einen Sensor mit zwei LC-Schwingkreisen,
Fig. 6    ein Elastomerprodukt in Form einer Luftfeder.

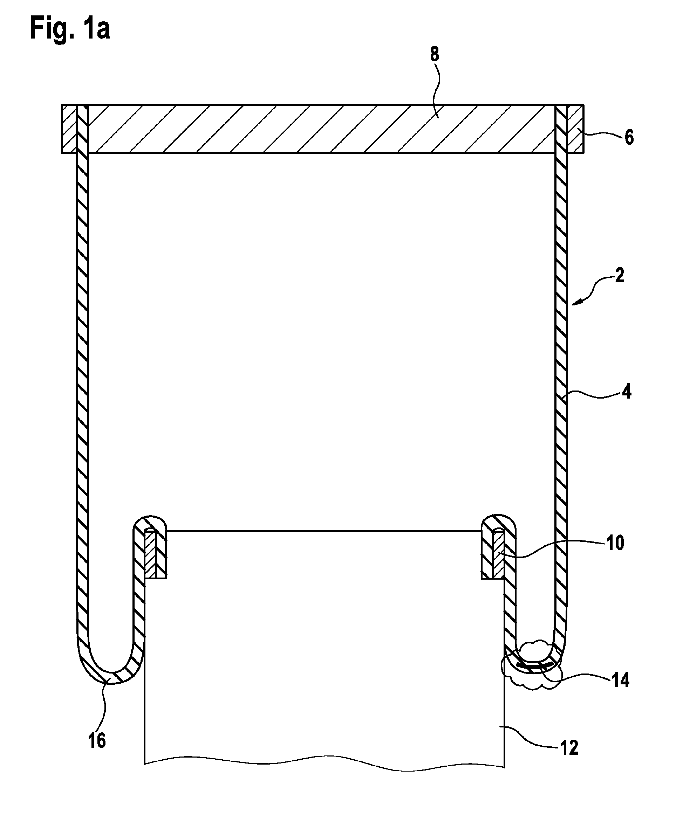

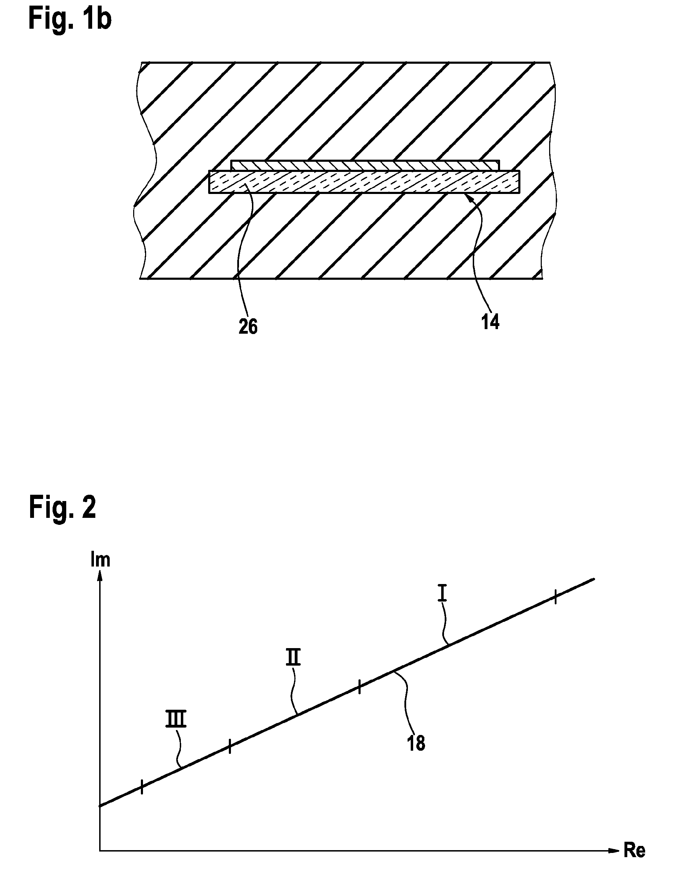

Im Zusammenhang mit der Figur 1 wird die Erfindung anhand eines Elastomerproduktes in Form einer Luftfeder 2 für ein Kraftfahrzeug mit einem Elastomerbauteil in Form eines Balges 4 erläutert. Die Erfindung kann jedoch in beliebigen Elastomerprodukten, wie Reifen, Schläuchen, Transportbändern, Antriebsriemen etc. eingesetzt werden. Der Balg 4 ist an seinem oberen Ende mit einem Klemmring 6 an dem Deckel 8 und an seinem unteren Ende mit einem Klemmring 10 an dem Abrollkolben 12 der Luftfeder befestigt. In den Balg 4 ist ein Sensor 14 derart eingebettet, dass er von dem Elastomer des Balges 4 allseitig vollständig umgeben ist. Mit Hilfe des Sensors 14 ist die Dielektrizitätskonstante des Elastomers des Balges 4 messbar. Der Sensor 14 ist in der Rollfalte 16 des Balges 4 angeordnet, die besonders hohen dynamischen Belastungen ausgesetzt ist.

Zur Einbringung des Sensors 14 in den Balg 4 der Luftfeder 2 ist der Sensor 14 auf einem Trägermaterial 26 angeordnet und mit diesem verbunden. Bei der Herstellung des Balges 4 wird das Trägermaterial 26 mit dem darauf befindlichen Sensor 14 vor der Vulkanisation des Balges 4 in das Elastomer des Balges 4 eingebettet. Durch die Vulkanisation verbindet sich das Trägermaterial 16 stoffschlüssig mit dem umgebenen Elastomer 18 des Balges 4 (s. auch Fig.1b, die einen vergrößerten Ausschnitt aus der Fig.1a zeigt).

Figur 2 zeigt ein Diagramm, in dem der Realteil der Dielektrizitätskonstanten des Elastomers, das den Sensor 14 umgibt (s. Figur 1) über dem Imaginärteil dieser Dielektrizitätskonstanten aufgetragen ist. In dem Diagramm ist eine Kennlinie 18 eingetragen, die systematisch den Zusammenhang zwischen dem Realteil und dem Imaginärteil der Dielektrizitätskonstanten wiedergibt. Untersuchungen haben ergeben, dass mit zunehmenden Alter des Elastomers des Balges 4 (s. Figur 1) sowohl der Realteil als auch der Imaginärteil des Dielektrizitätskonstanten sinkt. Hierbei wird der Alterungsprozess des Elastomers hauptsächlich durch die Lastwechsel bestimmt, die auf das Elastomer einwirken. Bei der in der Figur 1 gezeigten Luftfeder findet ein Lastwechsel für das Elastomer z. B. dann statt, wenn das Elastomer beim Abrollen des Balges 4 an dem Abrollkolben 12 durch die Rollfalte 16 läuft.

Auf der Kennlinie 18 sind drei Intervalle I, II und III eingezeichnet. Hierbei gibt das Intervall I den Realteil und den Imaginärteil der Dielektrizitätskonstanten für ein neuwertiges Elastomer wieder, auf das wenige Lastwechsel eingewirkt haben (z.B. 0 bis 1 Million Lastwechsel). Das Intervall II gibt den Realteil und den Imaginärteil der Dielektrizitätskonstanten für ein Elastomer wieder, auf das eine mittlere Anzahl von Lastwechseln eingewirkt hat (z. B. 1 Million bis 10 Millionen Lastwechsel). Das Intervall III gibt den Realteil und Imaginärteil der Dielektrizitätskonstanten für ein Elastomer wieder, das alt ist und auf das eine hohe Anzahl von Lastwechseln (z. B. 10 Millionen bis 20 Millionen Lastwechsel) eingewirkt hat. Die Kennlinie 18 kann an einem Prüfkörper oder an einer neuwertigen Luftfeder in einem Prüfstand aufgenommen werden, so dass sie bei späteren Messungen an Luftfedern, die im tatsächlichen Einsatz sind, zu Vergleichszwecken zur Verfügung steht.

Bei einer Luftfeder, die tatsächlich im Einsatz ist, kann später in regelmäßigen Abständen (z. B. bei Wartungsarbeiten in einer Werkstatt) mit Hilfe des Sensors 14 die Dielektrizitätskonstante bzw. der Realteil und der Imaginärteil dieser bestimmt werden. Nach Kenntnis des Realteils und Imaginärteils der Dielektrizitätskonstanten kann dann bestimmt werden, in welchem Intervall der Kennlinie 18 sich das Elastomer, in das der Sensor 14 eingebettet ist, befindet. Je nach Alterungszustand bzw. je nach Anzahl der Lastwechsel des Elastomers können dann bestimmte Maßnahmen, z. B. das Auswechseln der Luftfeder bzw. das Auswechseln des Balges der Luftfeder, empfohlen oder eingeleitet werden (es kann z.B. empfohlen werden, die Luftfeder zu tauschen, wenn eine bestimmte Anzahl von Lastwechseln überschritten worden ist (z.B. 10 Millionen Lastwechsel überschritten worden sind und sich die die komplexe Dielektrizitätskonstante also im Intervall III (s.Fig.2) befindet)).

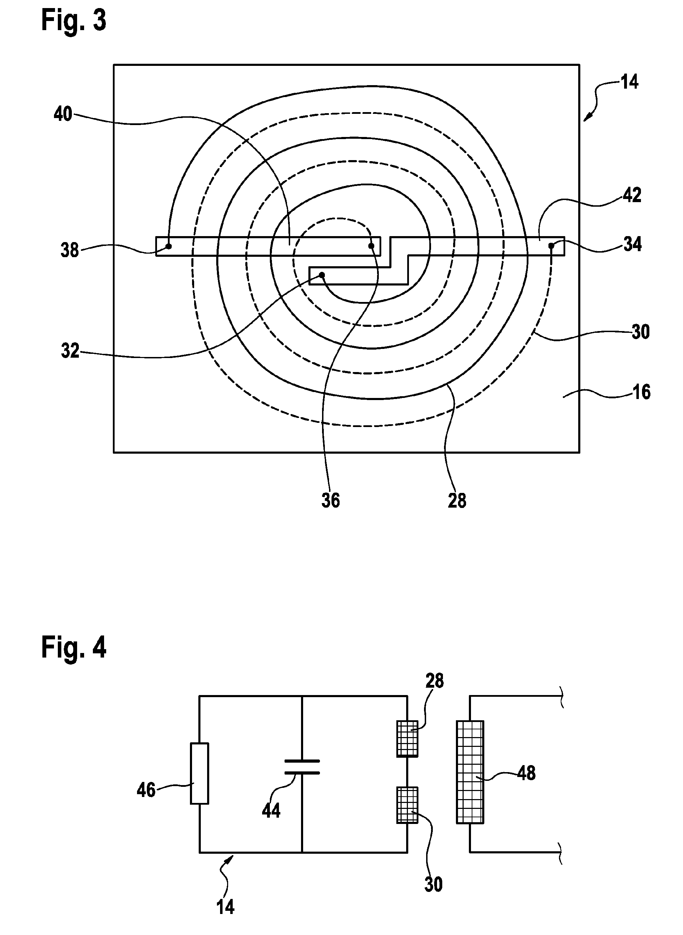

Figur 3 zeigt einen Sensor 14, der auf einem Trägermaterial 26 angeordnet ist, in Draufsicht. Der Sensor 14 ist als LC-Schwingkreis ausgebildet. Dazu weist der Sensor 14 zwei spiralförmige elektrische Leiterbahnen 28 und 30 auf, die ineinander gewunden sind. Die Spiralen 28, 30 sind kreuzweise miteinander elektrisch verbunden, d. h. das innenliegende Ende 32 der Spule 28 ist mit dem außenliegenden Ende 34 der Spule 30 und das innenliegende Ende 36 der Spule 30 ist mit dem außenliegenden Ende 38 der Spule 28 verbunden. Die genannten Verbindungen erfolgen über elektrische Leiterbahnen 40 und 42 (die elektrischen Leiterbahnen 28, 30, 40, 42 sind vorzugsweise elastisch dehnbar ausgebildet). Die beiden Spulen 28, 30 bilden gleichzeitig einen Kondensator, zwischen dessen "Kondensatorplatten" das Elastomer liegt (das also das Dielektrikum bildet), in das der Sensor 14 eingebettet ist (s. auch Figur 1). Somit ist der Sensor 14 als LC-Schwingkreis ausgebildet, mit dem die komplexe Dielektrizitätskonstante des Elastomers gemessen werden kann, in das der Sensor eingebettet ist. Wie dies im Einzelnen erfolgt, wird im Folgenden anhand der Figur 4 erläutert.

Figur 4 zeigt ein Ersatzschaltbild des Sensors 14, das aus den Spulen 28, 30 besteht, die in Reihe geschaltet sind. Ferner enthält das Ersatzschaltbild einen Kondensator 44 und einen ohmschen Widerstand 46, die jeweils zu den Spulen 28, 30 parallel geschaltet sind. Das in der Figur 4 gezeigte Ersatzschaltbild gibt einen LC-Schwingkreis in der an sich bekannten Darstellung wieder.

Der LC-Schwingkreis kann von außen durch induktive Kopplung über eine Spule 48 zu Schwingungen angeregt werden. Eine Resonanz tritt auf, wenn der LC-Schwingkreis mit einer Frequenz angeregt wird, die der Eigenfrequenz $\omega_0$ des LC-Schwingkreises entspricht, wobei gilt, $\omega_0 = 1/(LC)^{1/2}$ (hierbei ist L die Summe der Induktivitäten der Spulen 28 und 30 und C die Kapazität des Kondensators 44). Aus dem Abklingverhalten der Schwingung des LC-Schwingkreises bzw. der Amplitude des Stromes kann die Dämpfungskonstante $\delta$ bestimmt werden, wobei gilt: $\delta = R/2L$ (hierbei ist R der Wert des ohmschen Widerstandes 46). Mit der so bestimmten Eigenfrequenz $\omega_0$ und der Dämpfungskonstanten $\delta$ des LC-Schwingkreises kann schließlich die Dielektrizitätskonstante und die komplexe Dielektrizitätskonstante wie folgt bestimmt werden:

$$\mathrm{Im}\ DK = L/2\ (\delta\ \omega_d^2 + 1/\ \delta);$$

Mit:

Im DK = Imaginäranteil der Dielektrizitätskonstanten
$\omega_d = \omega_0(1-1/(\omega_0\delta)^2)^{1/2}$
L = Summe der Induktivitäten der Spulen 28 und 30
(s. Fig.3)

$$\mathrm{Re}\ DK = [\delta\ /\ (2\ \mathrm{Im}\ DK)] - C$$

Mit:

Re DK = Realteil der Dielektrizitätskonstanten
C = Kapazität der Spulen 28 und 30 ohne Dielektrikum, d.h. $\varepsilon_r = 1$ (s.Fig.3)

$$DK\ komplex\ = \mathrm{Re}\ DK + i\ \mathrm{Im}\ DK$$

Mit: DK komplex = komplexe Dielektrizitätskonstante

Aus dem Realteil und dem Imaginärteil der komplexen Dielektrizitätskonstanten kann auf den Alterungszustand des Elastomers bzw. auf die Anzahl der Lastwechsel, die auf das Elastomer eingewirkt haben, geschlossen werden. Hierzu wird geprüft, welcher Punkt sich aus dem Realteil und dem Imaginärteil sich auf der Kennlinie 18 ergibt (s. Fig.2) und aus dem so bestimmten Punkt wird auf die Anzahl der Lastwechsel geschlossen.

Zur genaueren Bestimmung der Dielektrizitätskonstante kann das Elastomer, in das der Sensor 14 eingebettet ist, ähnliche mechanische Eigenschaften wie das Elastomer des Balges 4 aufweist und sich in seinen elektrischen Eigenschaften von dem Elastomer des Balges 4 unterscheiden. Es ist beispielsweise möglich, das Elastomer des Balges 4 im Bereich des Sensors 14 mit Ruß zu versehen, so dass sein ohmscher Widerstand und damit seine Dämpfungskonstante kleiner werden.

Die in der Figur 4 gezeigte Spule 48 kann Bestandteil eines Diagnosegerätes sein, mit dem in regelmäßigen Abständen der Sensor 14 in dem Elastomerbauteil des Elastomerproduktes zu Schwingungen angeregt wird. Hierbei können die Eigenfrequenz und die Dämpfungskonstante der erzwungenen Schwingung in dem Handgerät analysiert und dementsprechend die komplexe Dielektrizitätskonstante, d.h. insbesondere deren Realteil und Imaginärteil, bestimmt werden. Dies kann in regelmäßigen Abständen, z.B. bei Wartungsarbeiten, erfolgen.

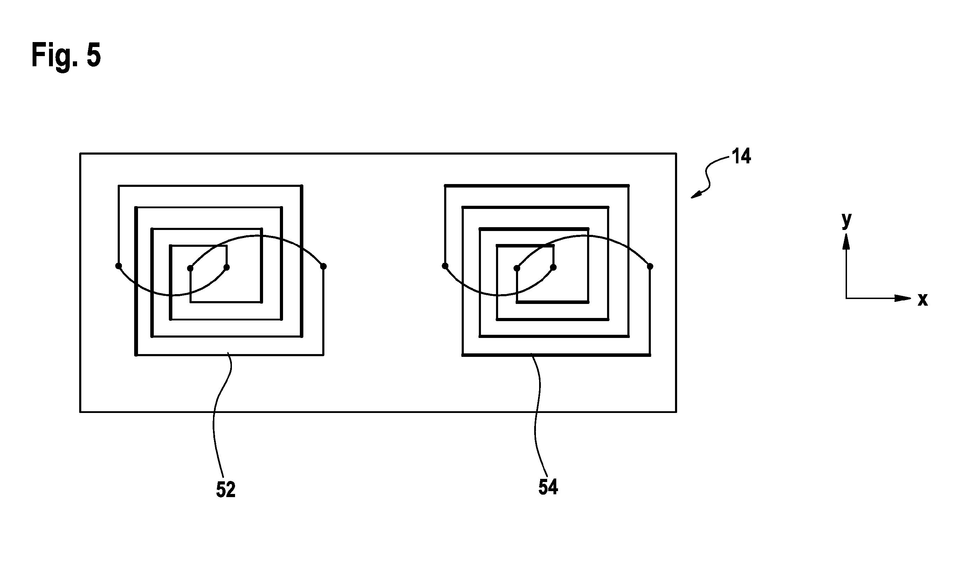

Figur 5 zeigt einen Sensor 14, der derart ausgebildet ist, dass mit ihm zusätzlich zur komplexen Dielektrizitätskonstanten die Dehnung des Elastomers messbar ist, das den Sensor 14 umgibt. Hierzu weist der Sensor 14 zwei LC-Schwingkreise 50, 52 auf, die zu ihrer Unterscheidbarkeit unterschiedliche Eigenfrequenzen und Dämpfungskonstanten aufweisen und von denen jeder einzelne genauso aufgebaut ist, wie es im Zusammenhang mit der Figur 3 erläutert worden ist. Die einzelnen Windungen der Spulen sind bei den LC-Schwingkreisen 52, 54 rechteckig ausgebildet. Im LC-Schwingkreis 52 sind die Spulenabschnitte der Spulen, die in die y-Richtung (s. Koordinatensystem) weisen, hochohmig ausgebildet, wohingegen bei dem LC-Schwingkreis 54 die Spulenabschnitte der Spulen, die in x-Richtung weisen, hochohmig ausgebildet sind. Wird der Sensor 14 in y-Richtung gedehnt, so verändern sich der ohmsche Widerstand des LC-Schwingkreises 52 und damit die Dämpfungskonstante des Schwingkreises. Wird der Sensor 14 hingegen in der x-Richtung gedehnt, so verändern sich der ohmsche Widerstand des LC-Schwingkreises 54 und damit die Dämpfungskonstante des LC-Schwingkreises 54. Aus der Veränderung der Dämpfungskonstanten des LC-Schwingkreises 52 oder 54 kann also bestimmt werden, ob der Sensor 14 bzw. das Elastomer, in das der Sensor 14 eingebettet ist, in y-Richtung oder in x-Richtung gedehnt worden ist. Hierbei kann das Ausmaß der Dehnung aus dem Ausmaß der Änderung der Dämpfungskonstanten bestimmt werden.

Zur genauen Bestimmung des Alterungszustandes des Balges 4 bzw. der Anzahl der Lastwechsel, die auf den Balg 4 eingewirkt haben, ist es notwendig zu wissen, welchen Einfluss eine Dehnung des Elastomers auf die komplexe Dielektrizitätskonstante hat. Dies wird dadurch erreicht, dass man mit Hilfe der Ausmessung einer neuen Luftfeder nicht nur eine Kennlinie 18 (s.Fig. 2), sondern mehrere Kennlinien festlegt, wobei jeweils eine Kennlinie zu einem bestimmten Dehnungszustand des Elastomers des Balges 4 gehört.

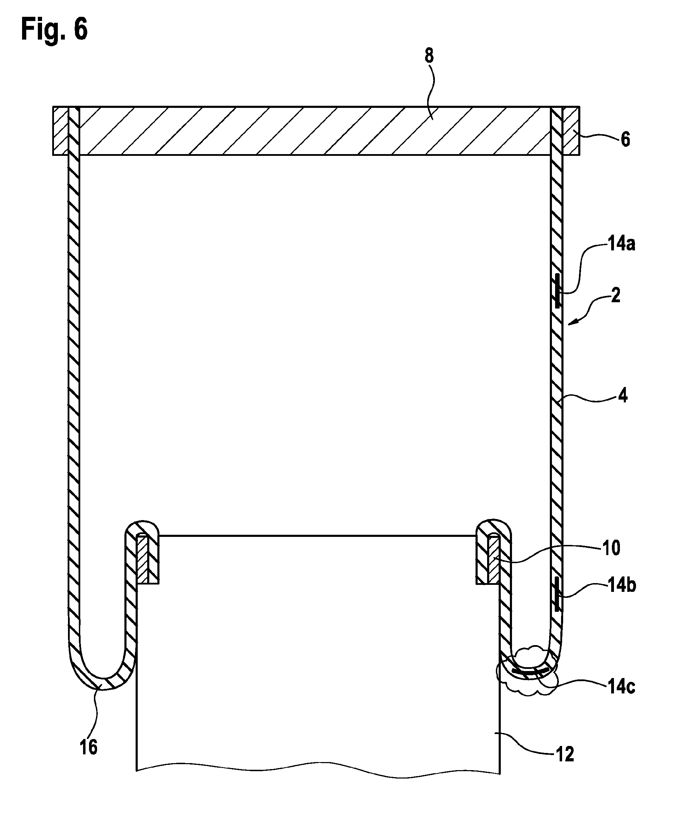

Figur 6 zeigt eine Luftfeder 2, die weitestgehend der in der Figur 1 gezeigten Luftfeder 2 entspricht. Der einzige Unterschied ist darin zu sehen, dass in das Elastomer des Balges 4 mehrere Sensoren 14a, 14b und 14c eingebettet sind. Der Sensor 14c ist einem Bereich des Balges 4 eingebettet, der schon bei einer geringen Einfederung der Luftfeder 2 die Rollfalte 16 des Balges 4 durchläuft. Der Sensor 14b ist in einem Bereich des Balges 4 eingebettet, der erst bei großen Einfederungen der Luftfeder 2 die Rollfalte 16 durchläuft. Der Sensor 14a ist in einem Bereich des Balges 4 eingebettet, der die Rollfalte 16 des Balges 4 auch bei sehr großen Einfederungen der Luftfeder 2 nicht durchläuft. Aus der Anzahl der Lastwechsel (die aus der komplexen Dielektrizitätskonstanten bestimmt wird), die auf das Elastomer des Balges 4 im Bereich des Sensors 14c und im Bereich des Sensors 14b jeweils einwirken, kann bestimmt werden, wie viele Schwingungen kleiner Amplitude und großer Amplitude die Luftfeder 2 im Laufe ihres Lebens gemacht hat. Hierbei gibt die Anzahl der Lastwechsel an dem Sensor 14c die Anzahl der Schwingungen mit kleiner Amplitude wieder, wohingegen die Anzahl der Schwingungen an den Sensoren 14c und 14b die Anzahl der Schwingungen mit großer Amplitude wiedergibt (Beispiel: an dem Sensor 14c wurden 10.000 Lastwechsel gemessen und an dem Sensor 14b wurden 5.000 Lastwechsel gemessen. Dies bedeutet, dass die Luftfeder 2 insgesamt 10.000-mal eingefedert ist, nämlich 5.000-mal mit kleiner Amplitude (nur der Sensor 14c wird beeinflusst) und 5.000 mal mit großer Amplitude (die Sensoren 14c und 14c werden beeinflusst)). Es kann nun eine maximale Anzahl von Schwingungen mit kleiner Amplitude und eine maximale Anzahl von Schwingungen mit großer Amplitude festgelegt werden. Ein Auswechseln der Luftfeder bzw. des Balges 4 der Luftfeder ist dann notwendig und kann dann empfohlen werden, wenn eine der beiden Zahlen erreicht worden ist.

Mit Hilfe des Sensors 14a kann die Alterung des Elastomers des Balges 4 der Luftfeder 4 bestimmt werden, die unabhängig von Lastwechseln, die auf das Elastomer einwirken, ist und ausschließlich auf äußere Umgebungseinflüsse zurückzuführen ist. Auch in Folge dieser Alterung verändern sich der Realteil und der Imaginärteil der Dielektrizitätskonstanten des Elastomers, so dass auch hier Vorgaben gemacht werden können, wann die Luftfeder 2 bzw. der Balg 4 ausgewechselt werden müssen.

## Bezugszeichenliste

(Teil der Beschreibung)

| | |
|---|---|
| 2 | Luftfeder |
| 4 | Balg |
| 6 | Klemmung |
| 8 | Deckel |
| 10 | Klemmring |
| 12 | Abrollkolben |
| 14 | Sensor |
| 16 | Rollfalte |
| 18 | Kennlinie |
| 20 | - |
| 22 | - |
| 24 | - |
| 26 | Trägermaterial |
| 28 | Spule |
| 30 | Spule |
| 32 | innen liegendes Ende |
| 34 | außen liegendes Ende |
| 36 | innen liegendes Ende |
| 38 | außen liegendes Ende |
| 40 | elektrische Leiterbahn |
| 42 | elektrische Leiterbahn |
| 44 | Kondensator |
| 46 | Widerstand |
| 48 | Spule |
| 52 | LC-Schwingkreis |
| 54 | LC-Schwingkreis |

## Patentansprüche

1. Elastomerprodukt (2) mit einem Elastomerbauteil (4), insbesondere Luftfeder (2) mit einem Balg (4), **dadurch gekennzeichnet, dass** in das Elastomerbauteil (4) mindestens ein Sensor (14) eingebettet ist, mit dessen Hilfe die Dielektrizitätskonstante des Elastomers messbar ist, das den Sensor (14) umgibt.

2. Elastomerprodukt (2) nach Anspruch 1, **dadurch gekennzeichnet, dass** mit Hilfe des dem Sensors (14) die komplexe Dielektrizitätskonstante messbar ist.

3. Elastomerprodukt (2) nach einem der Ansprüche 1 bis 2, **dadurch gekennzeichnet, dass** der Sensor (14) als LC-Schwingkreis aufgebaut ist.

4. Elastomerprodukt (2) nach Anspruch 2, **dadurch gekennzeichnet, dass** der Sensor (14) aus zwei spiralförmigen elektrischen Leiterbahnen (28, 30) besteht, die ineinander gewunden und kreuzweise miteinander elektrisch verbunden sind.

5. Elastomerprodukt (2) nach einem der Ansprüche 1 bis 4, **dadurch gekennzeichnet, dass** der Sensor (14) derart ausgebildet ist, dass mit ihm zusätzlich die Dehnung des Elastomers messbar ist, das den Sensor (14) umgibt.

6. Elastomerprodukt (2) nach Anspruch 5, **dadurch gekennzeichnet, dass** der Sensor (14) einen ersten LC-Schwingkreis (52) mit einer ersten Spule aufweist, die in einer ersten Richtung hochohmige Spulenabschnitte aufweist, und einen zweiten LC-Schwingkreis mit einer zweiten Spule (54) aufweist, die in einer zweiten Richtung hochohmige Spulenabschnitte aufweist, wobei die beiden Richtungen linear unabhängig voneinander sind.

7. Elastomerprodukt (2) nach einem der Ansprüche 1 bis 6, **dadurch gekennzeichnet, dass** der Sensor (14) in ein Elastomer eingebettet ist, das ähnliche mechanische Eigenschaften wie das Elastomer des Elastomerbauteils (4) aufweist und sich in seinen elektrischen Eigenschaften von Elastomer des Elastomerbauteils (4) unterscheidet.

8. Elastomerprodukt (2) nach einem der Ansprüche 1 bis 7, **dadurch gekennzeichnet, dass** in dem Elastomerbauteil (4) mehrere Sensoren (14a, 14b, 14c) eingebettet sind, die in unterschiedlichen Belastungszonen des Elastomerbauteils (4) angeordnet sind.

9. Elastomerprodukt (2) nach einem der Ansprüche 1 bis 8, **dadurch gekennzeichnet, dass** sich der Sensor (14) auf einem Trägermaterial (26) befindet und dass das Trägermaterial (26) stoffschlüssig mit dem umgebenden Elastomer des Elastomerbauteils (4) verbunden ist.

10. Elastomerprodukt (2) nach Anspruch 9, **dadurch gekennzeichnet, dass** die elektrischen Leiterbahnen (28, 30, 40, 42) des Sensors (14) elastisch dehnbar ausgebildet sind.

**Fig. 1a**

# Fig. 1b

26    14

# Fig. 2

## Fig. 3

## Fig. 4

**Fig. 5**

EP 2 375 099 A2

## Fig. 6

**EP 2 375 099 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10242785 A1